# EUROPEAN PATENT SPECIFICATION

(11) **EP 3 783 065 B1**
(45) Date of publication and mention of the grant of the patent: **13.03.2024**
(21) Application number: 19788722.7
(22) Date of filing: 09.04.2019
(51) Int. Cl.: C08L 81/02, C08L 23/00, C08L 63/00, B29C 48/32, F16L 11/04, B32B 1/08, B60K 15/03, C08K 3/00, C08L 23/04, C08L 81/00

(54) **POLYARYLENE SULFIDE RESIN COMPOSITION, EXTRUSION-MOLDED ARTICLE, METHOD FOR MANUFACTURING EXTRUSION-MOLDED ARTICLE, AND TRANSPORTATION MACHINE OR GENERATOR**
POLYARYLENSULFIDHARZZUSAMMENSETZUNG, EXTRUSIONSFORMTEIL, VERFAHREN ZUR HERSTELLUNG EINES EXTRUSIONSGEFORMTEN TEILS UND TRANSPORTMASCHINE ODER GENERATOR
COMPOSITION DE RÉSINE DE SULFURE DE POLYARYLÈNE, ARTICLE MOULÉ PAR EXTRUSION, PROCÉDÉ DE FABRICATION D'ARTICLES MOULÉS PAR EXTRUSION, ET MACHINE DE TRANSPORT OU GÉNÉRATEUR

(30) Priority: 17.04.2018 JP 2018079010
(43) Date of publication of application: 24.02.2021
(73) Proprietor: Polyplastics Co., Ltd., Tokyo 108-8280 (JP)
(72) Inventor: OHNISHI, Katsuhei, Fuji-shi, Shizuoka 416-8533 (JP); MORIYA, Shotaro, Fuji-shi, Shizuoka 416-8533 (JP)
(74) Representative: Maiwald GmbH
(86) International application number: PCT/JP2019/015458
(87) International publication number: WO 2019/203062

(56) References cited:
- WO-A1-2009/088092
- JP-A- H0 492 112
- JP-A- S6 121 156
- JP-A- 2000 063 668
- JP-A- 2006 001 955
- JP-A- 2006 036 824
- JP-A- 2008 075 003
- JP-A- 2008 111 063
- JP-A- 2008 111 063
- JP-A- 2014 218 076
- JP-A- 2016 147 957
- JP-A- 2016 147 958
- JP-A- 2016 147 959
- JP-A- 2016 147 960
- US-A1- 2013 273 287

## Description

### TECHNICAL FIELD

The present invention relates to a polyarylene sulfide resin composition for extrusion molding; an extrusion molded article including the polyarylene sulfide resin composition; a method for producing an extrusion molded article using the polyarylene sulfide resin composition; and a transportation machine or an electric generator equipped with the extrusion molded article as a pipe for circulating long-life coolant (LLC).

### BACKGROUND ART

Polyarylene sulfide resins, represented by a polyphenylene sulfide resin, have high heat resistance, mechanical properties, chemical resistance, dimensional stability, and flame resistance. Therefore, the polyarylene sulfide resins are widely used as materials for components of electrical/electronic devices, vehicle devices, chemical devices, and the like.

Examples of resin compositions utilizing the above-mentioned excellent properties of the polyarylene sulfide resin include a proposed composition of the polyarylene sulfide resin and an olefin based co-polymer comprised of 10 to 50% by mass of an α-olefin structural unit and 50 to 90% by mass of an α,β-unsaturated carboxylic alkyl ester structural unit (see Patent Document 1). Such a polyarylene sulfide resin composition provides a molded article having various excellent properties such as impact resistance, tensile elongation, surface condition, and the like, without including a reinforcing agent such as a glass fiber.

Patent Document 1: Japanese Unexamined Patent Application, Publication No. H06-179791

JP 2014-218076 relates to resin composition for insert molding on a metal insert member subjected to a physical treatment and/or a chemical treatment. The resin composition contains (A) 100 parts by mass of a polyarylene sulfide resin, (B) 3 to 55 parts by mass of an epoxy group-containing olefin-based copolymer, and (C) 5 to 60 parts by mass of a polystyrene-based resin, where a ratio of a content of the (B) epoxy group-containing olefin-based copolymer to a content of the (C) polystyrene-based resin, ((B)/(C)), is 0.3 to 5.0.

JP S61 21156 discloses a polyarylene sulfide resin composition obtained by melt incorporating a polyarylene sulfide with an α-olefin-glycidyl methacrylate copolymer and if necessary a filler. The alpha-olefin-glycidyl methacrylate copolymer preferably has 0.5-30 wt%, preferably 3-15 wt% content of glycidyl methacrylate, and ethylene or propylene is used as the α-olefin. The amount of the above-mentioned copolymer to be incorporated is 5-90 parts by weight, based on 100 parts by weight of polyarylene sulfide.

US 2013/273287 describes components formed of blow molded thermoplastic compositions and methods for forming the thermoplastic compositions. Formation methods include dynamic vulcanization of a composition that includes an impact modifier dispersed throughout a polyarylene sulfide. A crosslinking agent is combined with the other components of the composition following dispersal of the impact modifier. The crosslinking agent reacts with the impact modifier to form crosslinks within and among the polymer chains of the impact modifier.

JP 2008-111063 provides extruded hollow molded articles including at least one layer comprising (a) a polyphenylene sulfide (PPS) resin composition, wherein the polyphenylene sulfide resin composition constituting the (a) layer is obtained by compounding (a2) 3-50 parts by weight epoxy group-containing α-olefin-based copolymer and (a3) 5-80 parts by weight crosslinked elastomer resin composition with (a1) 100 parts by weight PPS resin.

JP 2006-001955 relates to a polyarylene sulfide resin composition obtained by compounding (A) 100 parts by weight of a polyarylene sulfide resin having ≤0.55 g content of nitrogen element based on 1 kg of the resin with (B) 0.5-50 parts by weight of an olefinic copolymer consisting essentially of an α-olefin and a glycidyl ester of an α,β-unsaturated acid.

### DISCLOSURE OF THE INVENTION

### Problems to be Solved by the Invention

Polyarylene sulfide resin compositions can be desirably applied to products of extrusion molding such as tubes. However, the polyarylene sulfide resin composition described in, for example, Examples in Patent Document 1 has poor extrusion moldability due to its high melt index and melt viscosity.

Furthermore, it is a requirement that resin tubes or the like can be pushed onto pipe fittings such as nipples for connection whilst expanding the tube diameters to easily form fluid flow paths using the tubes. That is, the resin tubes are desired to have flexibility whereby no cracking or splitting occurs even when the tubes are pushed onto the pipe fittings such as the nipples. However, the polyarylene sulfide resin composition described in Patent Document 1 may lead to tube cracking when a tube made of the resin composition is pushed onto a pipe fitting such as a nipple for connection. Therefore, it is desired to provide polyarylene sulfide resin compositions which have improved flexibility properties.

The present invention has been made in view of the above-mentioned problems and an object of the present invention is to provide a polyarylene sulfide resin composition for extrusion molding, the composition having both good extrusion moldability and flexibility, for example, whereby no cracking or splitting occurs even when a resin tube is pushed onto a pipe fitting such as a nipple; an extrusion-molded article produced using the polyarylene sulfide resin composition; a method for producing an extrusion-molded article using the polyarylene sulfide resin composition; and a transportation machine or an electric generator equipped with the extrusion molded article as a pipe that circulates a long-life coolant (LLC). Means for Solving the Problems

The present inventors have found that the above problems can be solved by using for extrusion molding, a polyarylene sulfide resin composition which contains as a resin component (A), a polyarylene sulfide resin (A1) having a peak molecular weight of 50000 or more and an epoxy group-containing olefin based copolymer (A2) at a predetermined composition, including a structural unit derived from an α-olefin (A2a), a structural unit derived from a glycidyl ester of an α,β-unsaturated acid (A2b), and a structural unit derived from (meth)acrylic acid ester (A2c), which has a ratio of a mass of the resin component (A) relative to a total mass of the polyarylene sulfide resin composition of 95% by mass or more, and which has nominal tensile strain at break as measured according to ISO527-1, 2 of 40% or more. Thus, the present invention has been completed. More specifically, the present invention provides the followings.

(1) A polyarylene sulfide resin composition for extrusion molding, the composition including:
   a resin component (A), the resin component (A) consisting of a polyarylene sulfide resin (A1) and an epoxy group-containing olefin based copolymer (A2),
   in which the composition includes or does not includes a colorant (B),
   wherein the polyarylene sulfide resin (A1) has a peak molecular weight of 50000 or more,
   in which a ratio of a mass of the resin component (A) relative to a total mass of the polyarylene sulfide resin composition is 95% by mass or more,
   in which a mass of the epoxy group-containing olefin based copolymer (A2) is 33 parts by mass or more and 55 parts by mass or less when a mass of the polyarylene sulfide resin (A1) is considered as 100 parts by mass,
   in which the epoxy group-containing olefin based copolymer (A2) includes a structural unit derived from an α-olefin (A2a), a structural unit derived from a glycidyl ester of an α,β-unsaturated acid (A2b), and a structural unit derived from (meth)acrylic acid ester (A2c),
   in which ratios of a mass of the structural unit (A2b) and a mass of the structural unit (A2c) relative to a mass of the epoxy group-containing olefin based copolymer (A2) are 2% by mass or more and 5% by mass or less and 20% by mass or more and 40% by mass or less, respectively,
   the composition having a nominal tensile strain at break of 40% or more as measured according to ISO527-1, 2.
(2) The polyarylene sulfide resin composition for extrusion molding according to (1), in which the polyarylene sulfide resin (A1) has a peak molecular weight of 55000 or more.
(3) The polyarylene sulfide resin composition for extrusion molding according to (1) or (2), in which the composition includes, as an additive (C), one or more selected from the group consisting of an antioxidant, a releasing agent, a corrosion inhibitor, and a nucleating agent.
(4) The polyarylene sulfide resin composition for extrusion molding according to any one of (1) to (3), which is for use in extrusion molding a pipe that circulates a long-life coolant.
(5) The polyarylene sulfide resin composition for extrusion molding according to (4), which is for use in extrusion molding a pipe that is used to connect to a pipe fitting by pushing the pipe onto the pipe fitting while expanding a diameter of the pipe.
(6) The polyarylene sulfide resin composition for extrusion molding according to (4) or (5), which is for use in extrusion molding a cylindrical pipe which has, in a shape immediately after extrusion, an outer diameter of 8.0 mm or more and 50.0 mm or less, an inner diameter of 5.0 mm or more and 49.5 mm or less, a thickness of 0.5 mm or more and 3.0 mm or less, and a length of 100 cm or more.
(7) An extrusion molded article including:
   the polyarylene sulfide resin composition according to any one of (1) to (3).
(8) The extrusion molded article according to (7), in which the article is a pipe that circulates a long-life coolant.
(9) The extrusion molded article according to (8), in which the article is a pipe used to connect to a pipe fitting by pushing the pipe onto the pipe fitting while expanding a diameter of the pipe.
(10) The extrusion molded article according to (9), in which the article is a cylindrical pipe which has, in a shape immediately after extrusion, an outer diameter of 8.0 mm or more and 50.0 mm or less, an inner diameter of 5.0 mm or more and 49.5 mm or less, a thickness of 0.5 mm or more and 3.0 mm or less, and a length of 100 cm or more.
(11) A method for producing the extrusion molded article according to any one of (7) to (10), the method including:
   extrusion-molding the polyarylene sulfide resin composition according to any one of (1) to (3).
(12) A device, including:
   an internal-combustion engine; and
   a circulating system that circulates a long-life coolant that cools the internal-combustion engine,
   in which the circulating system includes, as a pipe, the extrusion molded article according to (9) or (10), and
   in which the device is a transportation machine or an electric generator.

### BRIEF DESCRIPTION OF THE DRAWINGS

FIG. 1 is a diagram illustrating one aspect of a method for connecting a pipe made of a polyarylene sulfide resin composition to a pipe fitting by pushing the pipe onto the pipe fitting while expanding a diameter of the pipe;
FIG. 2 is a diagram illustrating another aspect of a method for connecting a pipe made of the polyarylene sulfide resin composition to a pipe fitting by pushing the pipe over the pipe fitting while expanding a diameter of the pipe;
FIG. 3 is a diagram illustrating still another aspect of a method for connecting a pipe made of the polyarylene sulfide resin composition to a pipe fitting by pushing the pipe onto the pipe fitting while expanding a diameter of the pipe; and
FIG. 4 is a graph illustrating a change in tensile strength (MPa) over exposure time in a test in which a test specimen for measuring tensile strength of the polyarylene sulfide resin composition of Example 1 was exposed to a long-life coolant including ethylene glycol and water at 130°C for 1000 hours.

### PREFERRED MODE FOR CARRYING OUT THE INVENTION

Embodiments of the present invention will now be described. It is noted that the present invention is not limited to the following embodiments.

### «Polyarylene sulfide resin composition»

A polyarylene sulfide resin composition is a composition used as a material for extrusion molding. The polyarylene sulfide resin composition includes, as a resin component (A), a polyarylene sulfide resin (A1) and an epoxy group-containing olefin based copolymer (A2). A ratio of a mass of the resin component (A) relative to a total mass of the polyarylene sulfide resin composition is 95% by mass or more. A content of the epoxy group-containing olefin based copolymer (A2) is 33 parts by mass or more and 55 parts by mass or less when a mass of the polyarylene sulfide resin (A1) is considered as 100 parts by mass. The polyarylene sulfide resin composition includes or does not include a colorant (B). The epoxy group-containing olefin based copolymer (A2) includes a structural unit derived from an α-olefin (A2a), a structural unit derived from a glycidyl ester of an α,β-unsaturated acid (A2b), and a structural unit derived from (meth)acrylic acid ester (A2c). Ratios of a mass of the structural unit (A2b) and a mass of the structural unit (A2c) relative to a mass of the epoxy group-containing olefin based copolymer (A2) are 2% by mass or more and 5% by mass or less and 20% by mass or more and 40% by mass or less, respectively. A nominal tensile strain at break as measured according to ISO527-1, 2 of the polyarylene sulfide resin composition is 40% or more.

Such a polyarylene sulfide resin composition has good extrusion moldability and, in particular, is easily extrusion-molded into even a long pipe such as those having a length of 100 cm or more. More specifically, the above-described polyarylene sulfide resin composition can be produced well by extrusion molding into even a cylindrical pipe which has, in a shape immediately after extrusion, an outer diameter of 8.0 mm or more and 50.0 mm or less, an inner diameter of 5.0 mm or more and 49.5 mm or less, a thickness of 0.5 mm or more and 3.0 mm or less, and a length of 100 cm or more.

Furthermore, since the nominal tensile strain at break as measured according to ISO527-1, 2 of the polyarylene sulfide resin composition is 40% or more, cracking or splitting is less likely to occur in an extrusion molded article made of such a polyarylene sulfide resin composition when the extrusion molded article is elastically deformed. Therefore, the above-described polyarylene sulfide resin composition is preferably used for extrusion molding a pipe which is used to connect to a pipe fitting by pushing the pipe onto the pipe fitting while expanding a diameter of the pipe by elastic deformation.

A method for adjusting the nominal tensile strain at break of the polyarylene sulfide resin composition is not particularly limited. Examples of the method for preparing the nominal tensile strain at break of the polyarylene sulfide resin composition include, for example, a method of adjusting an amount of addition or a type of an elastomeric component such as an olefin based copolymer, a method of adjusting an amount of addition or a type of a plasticizer component, and a method of adjusting a peak molecular weight of the polyarylene sulfide resin (A1).

Moreover, the extrusion molded article made of the above-described polyarylene sulfide resin composition is not changed in mechanical properties such as tensile strength and is less likely to swell, embrittle, deform, and the like even when it is brought into contact with a so-called "long-life coolant (LLC)" including an organic solvent component such as ethylene glycol and glycerol, and water for a long time. That is, the extrusion molded article made of the above-described polyarylene sulfide resin composition has excellent durability against water or an organic solvent, in particular, the "long-life coolant (LLC)". Therefore, the above-described polyarylene sulfide resin composition is suitably used as a material for extrusion-molding a pipe for circulating the "LLC" or a joint for connecting the pipe in, for example, a transportation machine which is driven by an internal-combustion engine such as a four-wheeled vehicle.

Essential or optional components to be included in the polyarylene sulfide resin composition and a method for producing the polyarylene sulfide resin composition will now be described.

### <Resin component (A)>

The polyarylene sulfide resin composition consists of, as the resin component (A), the polyarylene sulfide resin (A1) and the epoxy group-containing olefin based copolymer (A2). The polyarylene sulfide resin composition exerts the above-mentioned effects by including the polyarylene sulfide resin (A1) and the epoxy group-containing olefin based copolymer (A2) so that the polyarylene sulfide resin composition has the nominal tensile strain at break as measured according to ISO527-1, 2 of 40% or more.

A proportion of a total mass of the polyarylene sulfide resin (A1) and the epoxy group-containing olefin based copolymer (A2) in a mass of the resin component (A) is not particularly limited unless it interferes with the object of the present invention. The proportion of a total mass of the polyarylene sulfide resin (A1) and the epoxy group-containing olefin based copolymer (A2) in a mass of the resin component (A) is 100% by mass.

The ratio of a mass of the resin component (A) relative to a total mass of the polyarylene sulfide resin composition is 95% by mass or more, preferably 96% by mass or more, more preferably 97% by mass or more, and particularly preferably 98% by mass or more.

### [Polyarylene sulfide resin (A1)]

The polyarylene sulfide resin (hereinafter may also be referred to as PAS resin) (A1) is a resin mainly composed of, as a repeating unit, -(Ar-S)- wherein "Ar" represents an arylene group. In the present invention, a PAS resin having a commonly known molecular structure may be used. The PAS resin (A1) may be composed of only a linear molecule or may include a branched molecule.

The arylene group included in a main chain of the PAS resin (A1) may or may not have a substituent. The arylene group included in a main chain preferably has no substituent, for example, from the viewpoint that the PAS resin (A1) is easily and inexpensively produced and obtained.

Examples of the substituent on the arylene group include an alkyl group containing 1 or more and 4 or less carbon atoms, an alkoxy group containing 1 or more and 4 or less carbon atoms, an acyl group containing 2 or more and 4 or less carbon atoms, an amino group, a monoalkylamino group which has an alkyl moiety containing 1 or more and 4 or less carbon atoms, and a dialkylamino group which has an alkyl moiety containing 1 or more and 4 or less carbon atoms, etc.

Specific examples of the alkyl group containing 1 or more and 4 or less carbon atoms include a methyl group, an ethyl group, an n-propyl group, an isopropyl group, and an n-butyl group, etc. Specific examples of the alkoxy group containing 1 or more and 4 or less carbon atoms include a methoxy group, an ethoxy group, an n-propyloxy group, an isopropyloxy group, and an n-butyloxy group, etc. Specific examples of the acyl group containing 2 or more and 4 or less carbon atoms include an acetyl group, a propionyl group, and butanoyl group, etc. Specific examples of the monoalkylamino group which has an alkyl moiety containing 1 or more and 4 or less carbon atoms include a methylamino group, an ethylamino group, an n-propylamino group, an isopropylamino group, and an n-butylamino group, etc. Specific examples of the dialkylamino group which has an alkyl moiety containing 1 or more and 4 or less carbon atoms include a dimethylamino group, a diethylamino group, a di-n-propylamino group, a diisopropylamino group, and a di-n-butylamino group, etc.

The arylene group in -(Ar-S)- is not particularly limited, but examples thereof include a p-phenylene group, an m-phenylene group, an o-phenylene group, a substituted phenylene group, a p, p'-diphenylene sulfone group, a p, p'-biphenylene group, a p, p'-diphenylene ether group, a p, p'-diphenylene carbonyl group, a naphthalene group, and the like. Among arylene sulfide groups including such arylene groups, homopolymers including repeating units of the same type, as well as polymers including repeating units of different types of arylene sulfide groups are preferred depending on applications.

A resin including a repeating unit of a p-phenylene sulfide group as an arylene group is preferred as the homopolymer depending on applications. The homopolymer including a repeating unit of a p-phenylene sulfide group has extremely high heat resistance, and exhibits high strength, high stiffness, and even high dimensional stability over a wide range of temperatures. Use of such a homopolymer can provide a molded article having very excellent physical properties.

A resin which includes a combination of two or more types of different arylene sulfide groups among those including the above-mentioned arylene groups can be used as the copolymer. Among the combination of the arylene sulfide groups, a combination including a p-phenylene sulfide group and an m-phenylene sulfide group is preferred from the viewpoints that a polyarylene sulfide resin composition having good moldability and a molded article having good physical properties such as heat resistance and a mechanical property can be obtained. Furthermore, a polymer containing a p-phenylene sulfide group in a proportion of 70% by mole or more is more preferred, and a polymer containing a p-phenylene sulfide group in a proportion of 80% by mole or more is even more preferred. It is noted that a PAS resin having a phenylene sulfide group is referred to as a polyphenylene sulfide resin.

The PAS resin (A1) may be produced by conventionally known polymerization methods. The PAS resin produced by a common polymerization method is usually washed with water or acetone for several times, and then washed with acetic acid, ammonium chloride, and the like, in order to remove by-product impurities and the like. As a result, the resultant PAS resin (A1) has carboxyl terminal groups at the ends at a predetermined proportion by weight.

The peak molecular weight of the PAS resin (A1) is 50000 or more and preferably 55000 or more, from the viewpoint of easy availability of a polyarylene sulfide resin composition exhibiting a desired nominal tensile strain at break. Further, the peak molecular weight of the PAS resin (A1) is preferably 100000 or less and more preferably 80000 or less, from the viewpoint of achievement of both a desired nominal tensile strain at break and good extrusion moldability. The peak molecular weight of the PAS resin (A1) falling within the above-described range easily enables the polyarylene sulfide resin composition to have both good extrusion moldability and flexibility, for example, whereby no cracking or splitting occurs even when the resin tube is pushed onto a pipe fitting such as a nipple.

The peak molecular weight of the PAS resin (A1) may be measured by a high-temperature gel permeation chromatographic method as the peak top molecular weight of a molecular weight distribution converted to standard polystyrene. The high-temperature gel permeation chromatographic method can be performed, for example, using a device such as SSC-7000 manufactured by Senshu Scientific Co., Ltd. (UV detector: detection wavelength 360 nm). A solution in which a polyarylene sulfide resin is dissolved in 1-chloronaphthalene, which is a solvent, under conditions at 230°C for 10 minutes so as to give a concentration of 0.05% by mass may be used as a measurement sample. Further, the peak molecular weight of the PAS resin (A1) may be adjusted by adjusting polymerization conditions under which the PAS resin (A1) is produced, according to a well-known method.

A melt viscosity of the PAS resin (A1) measured at a shear rate of 1216 sec⁻¹ and at 310°C is preferably 50 to 300 Pa·s, more preferably 80 to 300 Pa·s, and particularly preferably 100 to 300 Pa·s from the viewpoints of good extrusion moldability and, in particular, easiness of extrusion molding of a long pipe such as those having a length of 100 cm or more.

### [Epoxy group-containing olefin based copolymer (A2)]

The polyarylene sulfide resin composition contains the epoxy group-containing olefin based copolymer (A2). As the epoxy group-containing olefin based copolymer (A2), an olefin based copolymer including the structural unit derived from an α-olefin (A2a), the structural unit derived from a glycidyl ester of an α,β-unsaturated acid (A2b), and the structural unit derived from (meth)acrylic acid ester (A2c) is used. The epoxy group-containing olefin based copolymer (A2) may be used in combination of two or more.

The epoxy group-containing olefin based copolymer (A2) may be a block copolymer or a random copolymer, the copolymer including the structural unit (A2a), the structural unit (A2b), and the structural unit (A2c). The random copolymer is particularly preferred from the viewpoint that a desired effect due to use of the epoxy group-containing olefin based copolymer (A2) is easily achieved. Further, the epoxy group-containing olefin based copolymer (A2) is preferably a non-graft copolymer.

When the epoxy group-containing olefin based copolymer (A2) is the random copolymer or the non-graft copolymer, a block composed of only a certain structural unit is less likely to be unevenly distributed in a main chain or a graft chain of the epoxy group-containing olefin based copolymer (A2). In this case, since the structural unit (A2a), the structural unit (A2b), and the structural unit (A2c) included in the epoxy group-containing olefin based copolymer (A2) are not unevenly distributed in a molecule of the polymer, an effect that each structural unit exhibits is likely to be exerted to the desired extent. For the above reason, the epoxy group-containing olefin based copolymer (A2) is preferably a random copolymer or a non-graft copolymer.

The ratios of a mass of the structural unit (A2b) and a mass of the structural unit (A2c) relative to a mass of the epoxy group-containing olefin based copolymer (A2) are 2% by mass or more and 5% by mass or less and 20% by mass or more and 40% by mass or less, respectively. The ratios of a mass of the structural unit (A2b) and a mass of the structural unit (A2c) relative to a mass of the epoxy group-containing olefin based copolymer (A2) are preferably 2.5% by mass or more and 4% by mass or less and 25% by mass or more and 35% by mass or less, respectively.

The epoxy group-containing olefin based copolymer (A2) including the structural unit (A2b) in an amount falling within the above-described range allows the polyarylene sulfide resin composition having good extrusion moldability to be easily obtained. Furthermore, the epoxy group-containing olefin based copolymer (A2) including the structural unit (A2c) in an amount falling within the above-described range easily achieves both good extrusion moldability and flexibility, for example, whereby no cracking or splitting occurs even when the resin tube is pushed onto a pipe fitting such as a nipple.

It is noted that (meth)acrylic acid ester may also be hereinafter referred to as (meth)acrylate. For example, (meth)acrylic acid glycidyl ester may also be referred to as glycidyl (meth)acrylate. Further, as used herein, the term "(meth)acrylic acid" means both acrylic acid and methacrylic acid, and the term "(meth)acrylate" means both acrylate and methacrylate.

The α-olefin providing the structural unit (A2a) is not particularly limited. Examples thereof include ethylene, propylene, and butylene, etc. Ethylene is particularly preferred. The α-olefin may be used alone, or in combination of two or more. The epoxy group-containing olefin based copolymer (A2) including the structural unit derived from an α-olefin easily imparts flexibility to a molded article formed with the polyarylene sulfide resin composition.

The glycidyl ester of an α,β-unsaturated acid is not particularly limited. Examples thereof include acrylic acid glycidyl ester, methacrylic acid glycidyl ester, and ethacrylic acid glycidyl ester, etc. and methacrylic acid glycidyl ester is particularly preferred. The glycidyl ester of an α,β-unsaturated acid may be used alone or in combination of two or more.

The (meth)acrylic acid ester is not particularly limited. Examples thereof include acrylic acid ester such as methyl acrylate, ethyl acrylate, n-propyl acrylate, isopropyl acrylate, n-butyl acrylate, n-hexyl acrylate, isobutyl acrylate, n-amyl acrylate, and n-octyl acrylate; methacrylic acid ester such as methyl methacrylate, ethyl methacrylate, n-propyl methacrylate, isopropyl methacrylate, n-butyl methacrylate, n-hexyl methacrylate, isobutyl methacrylate, n-amyl methacrylate, and n-octyl methacrylate, and the like. Among these, methyl acrylate is particularly preferred. The (meth)acrylic acid ester may be used alone, or in combination of two or more.

The epoxy group-containing olefin based copolymer (A2) including the structural unit (A2a), the structural unit (A2b), and the structural unit (A2c) may be produced by copolymerization according to a conventionally known method. For example, the above-described copolymer usually may be obtained by copolymerization according to a well-known radical polymerization reaction.

The epoxy group-containing olefin based copolymer (A2) may contain a structural unit derived from other copolymerization components than the α-olefin, the glycidyl ester of an α,β-unsaturated acid and the (meth)acrylic acid ester, in addition to the structural unit (A2a), the structural unit (A2b), and the structural unit (A2c), unless it interferes with the effect of the present invention.

More specific examples of the epoxy group-containing olefin based copolymer (A2) include a glycidyl methacrylate-modified ethylene based copolymer, a glycidyl ether-modified ethylene copolymer, and the like. Among these, glycidyl methacrylate-modified ethylene based copolymer is preferred.

Examples of the glycidyl methacrylate-modified ethylene based copolymer include an ethylene-glycidyl methacrylate-methyl acrylate copolymer, an ethylene-glycidyl methacrylate-ethyl acrylate copolymer, an ethylene-glycidyl methacrylate-propyl acrylate copolymer, an ethylene-glycidyl methacrylate-butyl acrylate copolymer, and the like. Among these, the ethylene-glycidyl methacrylate-methyl acrylate copolymer is preferred. Specific examples of the ethylene-glycidyl methacrylate-methyl acrylate copolymer include "BONDFAST" (manufactured by SUMITOMO CHEMICAL COMPANY, LIMITED) and the like.

A content of the epoxy group-containing olefin based copolymer (A2) is 33 parts by mass or more and 55 parts by mass or less, more preferably 37 parts by mass or more and 55 parts by mass or less, and particularly preferably 39 parts by mass or more and 51 parts by mass or less when a mass of the polyarylene sulfide resin (A1) is considered as 100 parts by mass. When the content is 33 parts by mass or more, sufficient toughness is easily obtained. Further, when the content is 55 parts by mass or less, a surface defect such as a streak or surface roughness is less likely to occur on a surface of a molded article upon extrusion molding, for example, a pipe. The content of the epoxy group-containing olefin based copolymer (A2) falling within the above-described range is capable of imparting to an extrusion molded article flexibility, for example, whereby no cracking or splitting occurs even when the resin tube is pushed onto a pipe fitting such as a nipple, and allows an extrusion molded article having good mechanical property and chemical resistance to be easily formed.

The proportion of a total mass of the polyarylene sulfide resin (A1) and the epoxy group-containing olefin based copolymer (A2) in a mass of the resin component (A) is 100% by mass.

### <Colorant (B)>

The polyarylene sulfide resin composition may or may not include a colorant (B). When the polyarylene sulfide resin composition includes the colorant (B), an extrusion molded article having excellent designability may be produced, or various machines produced using extrusion molded articles may be easily assembled or produced by coloring the extrusion molded articles with different colors.

Both dye and pigment may be used as the colorant (B), as long as the colorant has durability, that is, is not faded or discolored under extrusion molding conditions. The colorant (B) is preferably a pigment from the viewpoints of durability upon extrusion molding and good light resistance, weather resistance, and the like in an extrusion molded article.

Various commercially available colorants may be used as the colorant (B). For example, carbon black, and various compounds which are classified as Pigment or Dye in Color Index (C.I.; published by The Society of Dyers and Colorists) and to which the color index (C. I.) numbers are given may be preferably used as the colorant (B). The colorant (B) may be used in combination of two or more. A combination of pigment and dye may be used as the colorant (B).

An amount of use of the colorant (B) is not particularly limited as long as a ratio of a mass of the resin component (A) in a mass of the polyarylene sulfide resin composition is 95% by mass or more.

### <Additive (C)>

The polyarylene sulfide resin composition may include various additives (C) conventionally formulated in the polyarylene sulfide resin, in addition to the above-mentioned components, unless they interfere with the object of the present invention, in order to impart a desired physical property to the composition. Suitable examples of the additive (C) include one or more selected from the group consisting of an antioxidant, a releasing agent, a corrosion inhibitor, and a nucleating agent. An amount of use of the additive (C) is not particularly limited as long as a ratio of a mass of the resin component (A) in a mass of the polyarylene sulfide resin composition is 95% by mass or more.

### <Filler (D)>

The polyarylene sulfide resin composition may include a filler (D) unless it interferes with the object of the present invention. A content of the filler (D) in the polyarylene sulfide resin composition is 5% by mass or less, preferably 3% by mass or less, more preferably 1% by mass or less, and particularly preferably 0% by mass from the viewpoint of extrusion moldability of the polyarylene sulfide resin composition. Specific examples of the filler (D) include an inorganic fiber such as a glass fiber, a carbon fiber, a silica fiber, a silica/alumina fiber, a zirconia fiber, a boron nitride fiber, a boron fiber, a potassium titanate fiber, and a metal fiber (e.g., a stainless fiber, an aluminum fiber, a titanium fiber, a copper fiber, and a brass fiber, etc.); an organic fiber such as a polyamide fiber, a fluororesin fiber, and an acrylic resin fiber, etc.; a powdery inorganic filler such as silica, quartz powder, a glass bead, glass powder, silicate (e.g., calcium silicate, aluminum silicate, kaolin, talc, clay, diatomaceous earth, and wollastonite, etc.), a metal oxide (e.g., iron oxide, titanium oxide, zinc oxide, and alumina, etc.), a carbonate (e.g., calcium carbonate and magnesium carbonate, etc.), a sulfate (e.g., calcium sulfate and barium sulfate, etc.), silicon carbide, silicon nitride, boron nitride, and various metal powder; and a plate-like filler such as mica, glass flake, and various metal foils. These inorganic fillers may be used in combination of two or more.

### <Method for producing polyarylene sulfide resin composition>

A method for producing a polyarylene sulfide resin composition is not particularly limited and may be appropriately selected from conventionally known methods for producing a resin composition as long as components of the resin composition may be uniformly mixed. Examples thereof include a method in which components are melt-kneaded and extruded with a melt kneading device such as a single or twin screw extruder, and then the resultant resin composition is processed into a desired form such as powder, flake, and pellet.

### <<Extrusion molded article>>

An extrusion molded article may be produced by extrusion-molding the above-mentioned polyarylene sulfide resin composition. The extrusion molded article is the same as common extrusion molded articles except that the above-mentioned polyarylene sulfide resin composition is used as a material.

A method for producing the extrusion molded article is not particularly limited. For example, a cylindrical pipe is extrusion-molded using a die for a tube. When the extrusion molded article is a pipe, the pipe may be a multilayered pipe or a monolayered pipe. Since cracking or splitting is less likely to occur even when the pipe is pushed onto a pipe fitting such as a nipple, the pipe is preferably a monolayered pipe made of the above-mentioned polyarylene sulfide resin composition.

As mentioned above, a pipe formed by extrusion molding using the above-mentioned polyarylene sulfide resin composition is not changed in mechanical properties such as tensile strength and is less likely to swell, embrittle, deform, and the like even when it is brought into contact with a so-called "long-life coolant (LLC)" including an organic solvent component such as ethylene glycol and glycerol, and water for a long time. That is, the pipe formed by extrusion molding using the above-mentioned polyarylene sulfide resin composition has excellent durability against water or an organic solvent, in particular, the "LLC". Therefore, the pipe formed by extrusion molding using the above-mentioned polyarylene sulfide resin composition is suitably used as a pipe that circulates the LLC.

Further, the pipe formed by extrusion molding using the above-mentioned polyarylene sulfide resin composition is less likely to cause cracking or splitting even when the pipe is connected to a pipe fitting by pushing the pipe onto the pipe fitting while expanding a diameter of the pipe. Therefore, the pipe formed by extrusion molding using the above-mentioned polyarylene sulfide resin composition is suitably used as a pipe which is connected to a pipe fitting by pushing the pipe onto the pipe fitting while expanding a diameter of the pipe.

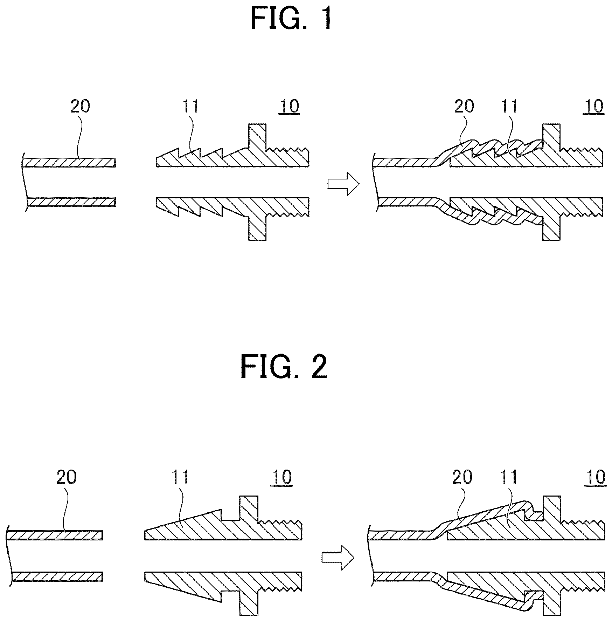

Referring to FIGs. 1 to 3, an aspect in which a pipe is connected to a pipe fitting by pushing the pipe onto the pipe fitting while expanding a diameter of the pipe will now be described. FIGs. 1 to 3 all illustrate cross-sections of a pipe 20 and a pipe fitting 10 perpendicular to a radial direction of the pipe 20 and the pipe fitting 10.

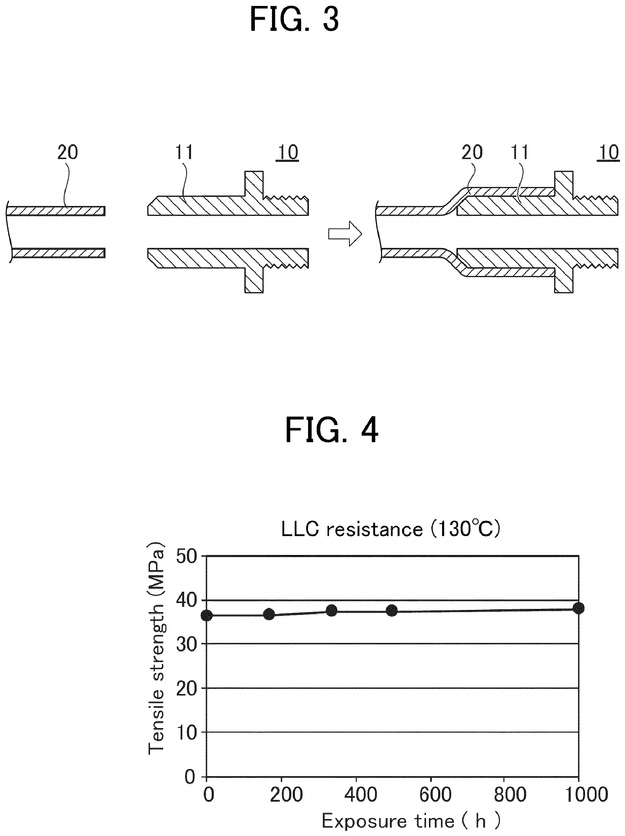

FIG. 1 illustrates a state in which the pipe 20 made of a polyarylene sulfide resin composition is connected to the pipe fitting 10 that includes a connection portion 11 having a plurality of steps of which outer diameter is expanded from an open end of the connection portion 11 towards a base side by pushing the pipe 20 onto the pipe fitting 10 while expanding the diameter of the pipe 20. States before and after the connection are illustrated in FIG. 1. FIG. 2 illustrates a state in which the pipe 20 made of the polyarylene sulfide resin composition is connected to the pipe fitting 10 which includes an almost spindle-shaped connection portion 11 having a smooth surface by pushing the pipe 20 onto the pipe fitting 10 while expanding the diameter of the pipe 20. States before and after the connection are illustrated in FIG. 2. FIG. 3 illustrates a state in which the pipe 20 made of the polyarylene sulfide resin composition is connected to the pipe fitting 10 which has a smooth surface and which includes a cylindrical connection portion 11 having an outer diameter slightly larger than an inner diameter of the pipe 20 made of a polyarylene sulfide resin composition by pushing the pipe 20 onto the pipe fitting 10 while expanding the diameter of the pipe 20. In the connection portion 11 illustrated in FIG. 3, since portions which abut on the pipe 20 at the open end of the connection portion 11 are chamfered, the diameter of the pipe 20 is easily expanded. States before and after the connection are illustrated in FIG. 3.

The pipe formed by extrusion molding using the above-mentioned polyarylene sulfide resin composition has preferably a cylindrical shape which has, in a shape immediately after extrusion, an outer diameter of 8.0 mm or more and 50.0 mm or less, an inner diameter of 5.0 mm or more and 49.5 mm or less, a thickness of 0.5 mm or more and 3.0 mm or less, and a length of 100 cm or more. The outer diameter, the inner diameter, and the thickness of the pipe are preferably uniform. The outer diameter, the inner diameter, and the thickness of the pipe may be changed from position to position, as necessary.

An upper limit of the length is not particularly limited as long as the pipe is extrusion moldable. Considering productivity, a molded article which is continuously long as possible is preferably formed. The upper limit of the length may be, for example, 500 cm or less, 300 cm or less, or 200 cm or less. The thus-produced long pipe is also preferably used in a state in which the pipe is cut into a desired length of less than 100 cm. Further, the long pipe may be produced as a straight pipe and then processed so as to change its shape by a well-known method such as bending or embossing.

The extrusion molded article and the pipe as described above are particularly preferably used as circulation pipe systems included in automobiles such as four-wheeled vehicles and motorcycles, transportation machines such as aircrafts and ships, internal-combustion engines such as electric generators and cooling systems with circulating a long-life coolant (LLC).

### EXAMPLES

The present invention will now be specifically described with reference to Examples and Comparative Examples, but the present invention is not limited to these Examples.

### [Examples 1 to 3, Comparative Examples 1 to 3]

In Examples and Comparative Examples, the following materials were used as materials for a polyarylene sulfide resin composition.

### <(A1) component: polyarylene sulfide resin>

A1-1: FORTRON KPS (manufactured by Kureha Corporation, melt viscosity: 130 Pa·s (shear rate: 1216 sec⁻¹ at 310°C), peak molecular weight: 65000).

A1-2: Polyphenylene sulfide resin obtained by a polymerization method described in Japanese Unexamined Patent Application, Publication No. 2006-063255 (peak molecular weight: 41000). The peak molecular weights of A1-1 and A1-2 were obtained by measuring as follows.

### [Method for measuring peak molecular weight]

A1-1 or A1-2 was heated to melt in an oil bath at 230°C for 10 min using 1-chloronaphthalene as a solvent to thereby prepare a solution having a concentration of 0.05% by mass. A peak top molecular weight of a molecular weight distribution converted to standard polystyrene was measured by high-temperature gel permeation chromatographic (GPC) measurement using SSC-7000 UV detector, manufactured by Senshu Scientific Co., Ltd. (detection wavelength: 360 nm) as a measurement device.

### <(A2) component: epoxy group-containing olefin based copolymer>

A2-1: BONDFAST (registered trademark) BF-7L, manufactured by SUMITOMO CHEMICAL COMPANY, LIMITED, ethylene (70% by mass) - glycidyl methacrylate (3% by mass) - methyl acrylate (27% by mass) copolymer.

### <(A2') component: epoxy group-containing olefin based copolymer>

A2-2: BONDFAST (registered trademark) BF-E, manufactured by SUMITOMO CHEMICAL COMPANY, LIMITED, ethylene (88% by mass) - glycidyl methacrylate (12% by mass) copolymer.

### <(A2") component: olefin based copolymer containing no epoxy group>

A2-3: ENGAGE 8003, manufactured by Dow Chemical Japan Limited, ethylene-octene copolymer.

Components in amounts presented in Table 1 were melt-kneaded with a twin screw extruder at a cylinder temperature of 320°C to thereby produce pellets made of resin compositions of Examples and Comparative Examples. The resultant resin compositions were used to evaluate tensile strength and nominal tensile strain at break according to the following method. Evaluation results of these mechanical properties are presented in Table 1.

### <Mechanical property evaluation condition>

The pellets made of the resin compositions of Examples and Comparative Examples were used to produce test specimens according to ISO3167 (width: 10 mm, thickness: 4 mm) by injection molding at a cylinder temperature of 320°C and a mold temperature of 150°C. These test specimens were used to measure the tensile strength (MPa) and the nominal tensile strain at break (%) according to ISO527-1, 2.

### <Durability test against long-life coolant>

The test specimen for measuring tensile strength made of the polyarylene sulfide resin composition of Example 1 were exposed to a long-life coolant (LLC) including ethylene glycol and water at 130°C for 1000 hours. FIG. 4 illustrates a graph showing a change in tensile strength (MPa) over exposure time in this test. It can be seen from FIG. 4 that the polyarylene sulfide resin composition of Example 1 changed little in tensile strength even when the composition was exposed to the LLC for such a long time as 1000 hours.

### <Long pipe molding test>

Pellets made of the polyarylene sulfide resin compositions of Examples and Comparative Examples were formed into cylindrical pipes each having an outer diameter of 20 mm, an inner diameter of 16.6 mm, a thickness of 1.7 mm, and a length of 120 cm under the following extrusion molding condition. The resultant molded articles were observed for appearance and shape and the test results were determined according to criteria described below. In the case where there was no surface defect such as a streak or surface roughness or shape defect such as distortion, it was determined as "Good". In the case where there was the above-mentioned surface defect or shape defect, it was determined as "Poor". The test results are presented in Table 1. Extrusion molding condition: cylinder temperature: 310°C

### <Insertion test onto nipple>

The pipe-shaped molded articles obtained in the long pipe molding test were cut to have a length of 15 cm to thereby obtain tube-like test specimens. The resultant tube-like test specimens were pushed onto nipples, which were fixed with jigs, for 15 mm at a rate of 500 mm / min from above using an autograph tester and then the presence or absence of cracking in the tube-like test specimen was confirmed. In the case where there was no cracking, it was determined as "Good". In the case where there was cracking, it was determined as "Poor". The test results are presented in Table 1. A shape of the nipple (pipe fitting) is illustrated in the schematic FIG. 1. Furthermore, a maximum outer diameter at a connection portion of the nipple is 19 mm.

**[Table 1]**

| | | Ex. 1 | Ex. 2 | Ex. 3 | Comp. ex. 1 | Comp. ex. 2 | Comp. ex. 3 |
|---|---|---|---|---|---|---|---|
| (A1) component (parts by mass) | A1-1 | 100 | 100 | 100 | 100 | 100 | - |
| | A1-2 | - | - | - | - | - | 100 |
| (A2) component (parts by mass) | A2-1 | 44 | 34 | 55 | - | 18 | 44 |
| (A2') component (parts by mass) | A2-2 | - | - | - | 7 | - | - |
| (A2") component (parts by mass) | A2-3 | - | - | - | 36 | - | - |
| Tensile strength | MPa | 37 | 40 | 34 | 40 | 51 | 36 |
| Nominal tensile strain at break | % | 94 | 45 | 100 | 25 | 17 | 30 |
| Long pipe molding test | | Good | Good | Good | Poor | Good | Good |
| Insertion test onto nipple | | Good | Good | Good | Poor | Poor | Poor |

It can be seen from Table 1 that, when the polyarylene sulfide resin compositions of Examples 1 to 3, which include the polyarylene sulfide resin (A1) and the epoxy group-containing olefin based copolymer (A2) satisfying the predetermined requirements at respective predetermined ratio and which have the nominal tensile strain at break of 40% or more, were used, long pipes of more than 100cm in length were easily extrusion molded and cracking or splitting was less likely to occur in the pipe even when pushed onto a nipple for connection.

Meanwhile, when the polyarylene sulfide resin composition of Comparative Example 1, which includes a combination of the epoxy group-containing olefin based copolymer (A2'), which did not satisfy the predetermined requirements, and the olefin based copolymer, containing no epoxy group (A2") and which has the nominal tensile strain at break of less than 40%, was used, it was difficult to extrusion mold a pipe of length more than 100cm and cracking occurred in the pipe when pushed onto a nipple for connection. Furthermore, when the polyarylene sulfide resin compositions of Comparative Examples 2 and 3, which include the epoxy group-containing olefin based copolymer (A2) satisfying the predetermined requirements but which have the nominal tensile strain at break of less than 40%, were used, a long pipe of more than 100 cm was extrusion molded satisfactorily but cracking occurred in the pipe when pushed onto a nipple for connection.

### EXPLANATION OF REFERENCE NUMERALS

- 10: Pipe fitting
- 11: Connection portion
- 20: Pipe

## Claims

1. A polyarylene sulfide resin composition for extrusion molding, the composition comprising:
a resin component (A), the resin component (A) consisting of a polyarylene sulfide resin (A1) and an epoxy group-containing olefin based copolymer (A2),
wherein the composition includes or does not include a colorant (B),
wherein the polyarylene sulfide resin (A1) has a peak molecular weight of 50000 or more, wherein a ratio of a mass of the resin component (A) relative to a total mass of the polyarylene sulfide resin composition is 95% by mass or more,
wherein a mass of the epoxy group-containing olefin based copolymer (A2) is 33 parts by mass or more and 55 parts by mass or less when a mass of the polyarylene sulfide resin (A1) is considered as 100 parts by mass,
wherein the epoxy group-containing olefin based copolymer (A2) includes a structural unit derived from an α-olefin (A2a), a structural unit derived from a glycidyl ester of an α,β-unsaturated acid (A2b), and a structural unit derived from (meth)acrylic acid ester (A2c), wherein ratios of a mass of the structural unit (A2b) and a mass of the structural unit (A2c) relative to a mass of the epoxy group-containing olefin based copolymer (A2) are 2% by mass or more and 5% by mass or less and 20% by mass or more and 40% by mass or less, respectively,
the composition having a nominal tensile strain at break of 40% or more as measured according to ISO527-1, 2.

2. The polyarylene sulfide resin composition for extrusion molding according to claim 1,
wherein the polyarylene sulfide resin (A1) has a peak molecular weight of 55000 or more.

3. The polyarylene sulfide resin composition for extrusion molding according to claim 1 or 2, wherein the composition includes, as an additive (C), one or more selected from the group consisting of an antioxidant, a releasing agent, a corrosion inhibitor, and a nucleating agent.

4. The polyarylene sulfide resin composition for extrusion molding according to any one of claims 1 to 3, which is for use in extrusion molding a pipe that circulates a long-life coolant.

5. The polyarylene sulfide resin composition for extrusion molding according to claim 4, which is for use in extrusion molding a pipe that is used to connect to a pipe fitting by pushing the pipe onto the pipe fitting while expanding a diameter of the pipe.

6. The polyarylene sulfide resin composition for extrusion molding according to claim 4 or 5, which is for use in extrusion molding a cylindrical pipe which has, in a shape immediately after extrusion, an outer diameter of 8.0 mm or more and 50.0 mm or less, an inner diameter of 5.0 mm or more and 49.5 mm or less, a thickness of 0.5 mm or more and 3.0 mm or less, and a length of 100 cm or more.

7. An extrusion molded article comprising:
the polyarylene sulfide resin composition according to any one of claims 1 to 3.

8. The extrusion molded article according to claim 7, wherein the article is a pipe that circulates a long-life coolant.

9. The extrusion molded article according to claim 8, wherein the article is a pipe that is used to connect to a pipe fitting by pushing the pipe onto the pipe fitting while expanding a diameter of the pipe.

10. The extrusion molded article according to claim 9, wherein the article is a cylindrical pipe which has, in a shape immediately after extrusion, an outer diameter of 8.0 mm or more and 50.0 mm or less, an inner diameter of 5.0 mm or more and 49.5 mm or less, a thickness of 0.5 mm or more and 3.0 mm or less, and a length of 100 cm or more.

11. A method for producing the extrusion molded article according to any one of claims 7 to 10, the method comprising:
extrusion-molding the polyarylene sulfide resin composition according to any one of claims 1 to 3.

12. A device, comprising:
an internal-combustion engine; and
a circulating system that circulates a long-life coolant that cools the internal-combustion engine,
wherein the circulating system includes, as a pipe, the extrusion molded article according to claim 9 or 10, and
wherein the device is a transportation machine or an electric generator.

## Patentansprüche

1. Eine Polyarylensulfidharz-Zusammensetzung für das Extrusionsformen, wobei die Zusammensetzung umfasst:
eine Harzkomponente (A), wobei die Harzkomponente (A) aus einem Polyarylensulfidharz (A1) und einem epoxidgruppenhaltigen Copolymer auf Olefinbasis (A2) besteht,
wobei die Zusammensetzung ein Farbmittel (B) enthält oder nicht enthält,
wobei das Polyarylensulfidharz (A1) ein Spitzenmolekulargewicht von 50000 oder mehr aufweist,
wobei das Verhältnis der Masse der Harzkomponente (A) zur Gesamtmasse der Polyarylensulfid-Harzzusammensetzung 95 Massenprozent oder mehr beträgt,
wobei die Masse des epoxidgruppenhaltigen Copolymers auf Olefinbasis (A2) 33 Masseteile oder mehr und 55 Masseteile oder weniger beträgt, wenn die Masse des Polyarylensulfidharzes (A1) als 100 Masseteile betrachtet wird,
wobei das epoxidgruppenhaltige Copolymer auf Olefinbasis (A2) eine von einem α-Olefin abgeleitete Struktureinheit (A2a), eine von einem Glycidylester einer α,β-ungesättigten Säure abgeleitete Struktureinheit (A2b) und eine von (Meth)acrylsäureester abgeleitete Struktureinheit (A2c) enthält,
wobei die Verhältnisse einer Masse der Struktureinheit (A2b) und einer Masse der Struktureinheit (A2c) relativ zu einer Masse des epoxygruppenhaltigen Copolymers auf Olefinbasis (A2) 2 Massenprozent oder mehr und 5 Massenprozent oder weniger und 20 Massenprozent oder mehr und 40 Massenprozent oder weniger betragen,
die Zusammensetzung eine nominelle Bruchdehnung von 40 % oder mehr aufweist, gemessen nach ISO 527-1, 2.

2. Die Polyarylensulfidharz-Zusammensetzung für das Extrusionsformen gemäß Anspruch 1, wobei das Polyarylensulfidharz (A1) ein Peak-Molekulargewicht von 55000 oder mehr aufweist.

3. Die Polyarylensulfidharz-Zusammensetzung für das Extrusionsformen gemäß Anspruch 1 oder 2, wobei die Zusammensetzung als Additiv (C) eines oder mehrere aus der Gruppe bestehend aus einem Antioxidationsmittel, einem Trennmittel, einem Korrosionsinhibitor und einem Keimbildner enthält.

4. Die Polyarylensulfidharz-Zusammensetzung für das Extrusionsformen gemäß einem der Ansprüche 1 bis 3, die für die Verwendung beim Strangpressen eines Rohrs bestimmt ist, in dem ein langlebiges Kühlmittel zirkuliert.

5. Die Polyarylensulfidharz-Zusammensetzung für das Extrusionsformen gemäß Anspruch 4, die für die Verwendung beim Extrusionsformen eines Rohrs bestimmt ist, das zur Verbindung mit einem Rohrfitting verwendet wird, indem das Rohr auf das Rohrfitting geschoben wird, während ein Durchmesser des Rohrs vergrößert wird.

6. Die Polyarylensulfid-Harzzusammensetzung für das Extrusionsformen gemäß Anspruch 4 oder 5, die zur Verwendung beim Extrusionsformen eines zylindrischen Rohrs dient, das in einer Form unmittelbar nach der Extrusion einen Außendurchmesser von 8,0 mm oder mehr und 50,0 mm oder weniger, einen Innendurchmesser von 5,0 mm oder mehr und 49,5 mm oder weniger, eine Dicke von 0,5 mm oder mehr und 3,0 mm oder weniger und eine Länge von 100 cm oder mehr aufweist.

7. Ein extrusionsgeformter Gegenstand, umfassend:
die Polyarylensulfidharz-Zusammensetzung nach einem der Ansprüche 1 bis 3.

8. Der extrusionsgeformte Gegenstand gemäß Anspruch 7, wobei der Gegenstand ein Rohr ist, das ein langlebiges Kühlmittel umwälzt.

9. Der extrusionsgeformte Gegenstand gemäß Anspruch 8, wobei der Gegenstand ein Rohr ist, das zur Verbindung mit einem Rohrfitting verwendet wird, indem das Rohr auf das Rohrfitting geschoben wird, während ein Durchmesser des Rohrs erweitert wird.

10. Der extrusionsgeformte Gegenstand gemäß Anspruch 9, wobei der Gegenstand ein zylindrisches Rohr ist, das in einer Form unmittelbar nach der Extrusion einen Außendurchmesser von 8,0 mm oder mehr und 50,0 mm oder weniger, einen Innendurchmesser von 5,0 mm oder mehr und 49,5 mm oder weniger, eine Dicke von 0,5 mm oder mehr und 3,0 mm oder weniger und eine Länge von 100 cm oder mehr aufweist.

11. Ein Verfahren zur Herstellung des extrusionsgeformten Gegenstands nach einem der Ansprüche 7 bis 10, wobei das Verfahren umfasst:
Extrusionsformen der Polyarylensulfidharz-Zusammensetzung nach einem der Ansprüche 1 bis 3.

12. Eine Vorrichtung, umfassend:
einen Verbrennungsmotor; und
ein Kreislaufsystem, das ein langlebiges Kühlmittel zur Kühlung des Verbrennungsmotors umwälzt,
wobei das Kreislaufsystem als Rohr den extrusionsgeformten Gegenstand nach Anspruch 9 oder 10 enthält, und
wobei das Gerät eine Transportmaschine oder ein elektrischer Generator ist.

## Revendications

1. Composition de résine de sulfure de polyarylène pour moulage par extrusion, la composition comprenant : un composant résine (A), le composant résine (A) étant constitué d'une résine de sulfure de polyarylène (Al) et d'un copolymère à base d'oléfine contenant un groupe époxy (A2),
dans laquelle la composition comporte ou ne comporte pas un colorant (B),
dans laquelle la résine de sulfure de polyarylène (Al) a un poids moléculaire maximal de 50000 ou plus,
dans laquelle un rapport d'une masse du composant résine (A) par rapport à une masse totale de la composition de résine de sulfure de polyarylène est de 95 % en masse ou plus,
dans laquelle une masse du copolymère à base d'oléfine contenant un groupe époxy (A2) est de 33 parties en masse ou plus et de 55 parties en masse ou moins lorsqu'une masse de la résine de sulfure de polyarylène (Al) est considérée comme étant égale à 100 parties en masse,
dans laquelle le copolymère à base d'oléfine contenant un groupe époxy (A2) comporte une unité structurelle dérivée d'une α-oléfine (A2a), une unité structurelle dérivée d'un ester glycidylique d'un acide α,β-insaturé (A2b), et une unité structurelle dérivée d'un ester d'acide (méth)acrylique (A2c), dans laquelle des rapports d'une masse de l'unité structurelle (A2b) et d'une masse de l'unité structurelle (A2c) par rapport à une masse du copolymère à base d'oléfine contenant un groupe époxy (A2) sont respectivement de 2 % en masse ou plus et de 5 % en masse ou moins et de 20 % en masse ou plus et de 40 % en masse ou moins,
la composition ayant une contrainte nominale de traction à la rupture de 40 % ou plus, telle que mesurée selon ISO527-1, 2.

2. Composition de résine de sulfure de polyarylène pour moulage par extrusion selon la revendication 1, dans laquelle la résine de sulfure de polyarylène (Al) a un poids moléculaire maximal de 55000 ou plus.

3. Composition de résine de sulfure de polyarylène pour moulage par extrusion selon la revendication 1 ou 2, dans laquelle la composition comporte, en tant qu'additif (C), un ou plusieurs éléments sélectionnés parmi le groupe constitué d'un antioxydant, d'un agent de libération, d'un inhibiteur de corrosion et d'un agent de nucléation.

4. Composition de résine de sulfure de polyarylène pour moulage par extrusion selon l'une des revendications 1 à 3, qui est destinée à être utilisée dans un moulage par extrusion d'un tuyau qui fait circuler un liquide de refroidissement à longue durée de vie.

5. Composition de résine de sulfure de polyarylène pour moulage par extrusion selon la revendication 4, qui est destinée à être utilisée dans un moulage par extrusion d'un tuyau qui est utilisé pour se connecter à un raccord de tuyau en poussant le tuyau sur le raccord de tuyau tout en élargissant un diamètre du tuyau.

6. Composition de résine de sulfure de polyarylène pour moulage par extrusion selon la revendication 4 ou 5, qui est destinée à être utilisée dans un moulage par extrusion d'un tuyau cylindrique qui a, sous une forme immédiatement après extrusion, un diamètre extérieur de 8,0 mm ou plus et de 50,0 mm ou moins, un diamètre intérieur de 5,0 mm ou plus et de 49,5 mm ou moins, une épaisseur de 0,5 mm ou plus et de 3,0 mm ou moins, et une longueur de 100 cm ou plus.

7. Article moulé par extrusion comprenant :
la composition de résine de sulfure de polyarylène selon l'une des revendications 1 à 3.

8. Article moulé par extrusion selon la revendication 7, dans lequel l'article est un tuyau qui fait circuler un liquide de refroidissement à longue durée de vie.

9. Article moulé par extrusion selon la revendication 8, dans lequel l'article est un tuyau qui est utilisé pour se connecter à un raccord de tuyau en poussant le tuyau sur le raccord de tuyau tout en élargissant un diamètre du tuyau.

10. Article moulé par extrusion selon la revendication 9, dans lequel l'article est un tuyau cylindrique qui a, sous une forme immédiatement après extrusion, un diamètre extérieur de 8,0 mm ou plus et de 50,0 mm ou moins, un diamètre intérieur de 5,0 mm ou plus et de 49,5 mm ou moins, une épaisseur de 0,5 mm ou plus et de 3,0 mm ou moins, et une longueur de 100 cm ou plus.

11. Procédé de production de l'article moulé par extrusion selon l'une des revendications 7 à 10, le procédé comprenant :
le moulage par extrusion de la composition de résine de sulfure de polyarylène selon l'une des revendications 1 à 3.

12. Dispositif, comprenant :
un moteur à combustion interne ; et
un système de circulation qui fait circuler un liquide de refroidissement à longue durée de vie qui refroidit le moteur à combustion interne,
dans lequel le système de circulation comporte, en tant que tuyau, l'article moulé par extrusion selon la revendication 9 ou 10, et
dans lequel le dispositif est une machine de transport ou un générateur électrique.
